# FASCICULE DE BREVET EUROPEEN

(11) **EP 2 550 805 B1**
(45) Date de publication et mention de la délivrance du brevet: **01.07.2020**
(21) Numéro de dépôt: 11712622.7
(22) Date de dépôt: 22.02.2011
(51) Int. Cl.: H04N 7/025, H04N 7/18, B60R 1/00, G06T 1/00, H04N 19/89

(54) **PROCÉDÉS ET DISPOSITIFS POUR LA GÉNÉRATION ET L'UTILISATION D'IMAGES VIDÉO COMPORTANT DES MESSAGES DE CONTRÔLE**
VERFAHREN UND VORRICHTUNGEN ZUR ERZEUGUNG UND VERWENDUNG VON VIDEOSPIELEN MIT STEUERUNGSNACHRICHTEN
METHODS AND DEVICES FOR GENERATING AND USING VIDEO IMAGES HAVING CONTROL MESSAGES

(30) Priorité: 22.03.2010 FR 1052051
(43) Date de publication de la demande: 30.01.2013
(73) Titulaire: PSA Automobiles SA, 78300 Poissy (FR)
(72) Inventeur: RAPINAT, Anne, 92320 Châtillon (FR); PERRAUD, Nicolas, 92130 Issy Les Moulineaux (FR); DESAULTY, Franck, 75015 Paris (FR); FROMION, Alexandre, 92160 Antony (FR)
(86) Numéro de dépôt international: PCT/FR2011/050370
(87) Numéro de publication internationale: WO 2011/117496

(56) Documents cités:
- EP-A2- 0 901 282
- WO-A2-2004/021275
- GB-A- 2 455 420
- US-A1- 2005 286 740
- US-A1- 2007 242 066

## Description

L'invention concerne les images vidéo, et plus précisément la génération d'images vidéo au niveau d'une source et l'utilisation d'images vidéo au niveau d'un récepteur.

On entend ici par "source" un équipement électronique ou informatique chargé de fournir des images vidéo destinées à être utilisées par un équipement de réception (ou récepteur). On notera qu'un tel équipement peut éventuellement acquérir les images vidéo. Par conséquent, il pourra par exemple s'agir d'un boîtier télématique ou d'une caméra vidéo chargée d'acquérir des images vidéo, par exemple de l'environnement d'un véhicule (éventuellement automobile).

Par ailleurs, on entend ici par "récepteur" un équipement électronique ou informatique chargé de réceptionner des images vidéo transmises par au moins une source et d'utiliser ces images vidéo reçues, ainsi que d'éventuelles données auxiliaires (par exemple fonctionnelles), afin de produire des images de synthèse destinées à être affichées. Par conséquent, il pourra par exemple s'agir d'un système d'aide à la conduite qui est implanté dans un véhicule (éventuellement automobile).

Comme le sait l'homme de l'art, dans certains systèmes, comme par exemple dans certains véhicules (éventuellement automobiles), le récepteur est connecté, d'une part, à un réseau de communication, généralement de type multiplexé, qui l'alimente en données auxiliaires (par exemple fonctionnelles, telles que la vitesse d'un véhicule, des indicateurs de phares utilisés ou des indicateurs de panne ou de dysfonctionnement), et, d'autre part, à au moins une ligne (ou liaison) vidéo numérique (par exemple de type LVDS ("Low Voltage Differential Signaling" - signalisation différentielle basse tension) ou CML ("Current Mode Logic")), qui est reliée à une source d'images vidéo. Dans ce cas, le récepteur utilise les données d'image vidéo et les données auxiliaires pour constituer des images de synthèse qui sont destinées à être affichées en temps réel.

Ce mode de constitution d'images de synthèse fonctionne très bien, tant que les données auxiliaires n'ont pas besoin d'être synchronisées avec certaines données d'image vidéo. Mais, lorsqu'une telle synchronisation est nécessaire, le mode précité ne peut pas fonctionner correctement étant donné que le réseau multiplexé et la liaison vidéo ne sont pas synchronisés.

On connaît, notamment du document GB2455420A un procédé traitement d'images pour constituer des images de synthèse à afficher, à partir d'images vidéo et de signaux de contrôles, certaines données de l'image vidéo source étant remplacées par des données de contrôle.

On connait aussi par le document US20070242066 un procédé traitement d'images pour constituer des images de synthèse à afficher, à partir d'images vidéo et de signaux de contrôles, certaines données de l'image vidéo source étant remplacées par des données de contrôle.

On connaît, notamment du document US20050286740 un procédé traitement d'images pour constituer des images de synthèse à afficher, à partir d'images vidéo.

Toutefois les signaux de commandes ne font pas partie des images vidéo en tant que telles mais sont superposées auxdites images.
Ce qui rend la taille de l'image, image vidéo plus signaux de contrôle relativement importante.
L'invention a donc pour but de remédier au moins partiellement à l'inconvénient précité.

Elle propose notamment à cet effet un procédé pour constituer des images de synthèse à afficher conforme à l'objet de la revendication 1

Le procédé selon l'invention peut comporter d'autres caractéristiques qui peuvent être prises séparément ou en combinaison, et notamment :
- en présence d'une image vidéo acquise qui est constituée de données d'image vidéo agencées sous la forme de N lignes, on peut remplacer une partie au moins de la n-ième ligne (avec 1 ≤ n ≤ N) par le message de contrôle;
- dans une variante, en présence d'une image vidéo acquise qui est constituée de données d'image vidéo agencées sous la forme de M colonnes, on peut remplacer une partie au moins de la m-ième colonne (avec 1 ≤ m ≤ N) par ledit message de contrôle;
- en cas de remplacement de données d'image vidéo dans une partie au moins d'une n-ième ligne ou d'une m-ième colonne, on peut remplacer en réception chaque donnée remplacée par un niveau de gris;
- dans une première variante, on peut remplacer des données d'image vidéo dans une partie au moins d'une n-ième ligne ou d'une m-ième colonne par des données d'un message de contrôle dont les valeurs définissent des niveaux de gris, et en réception on peut utiliser le niveau de gris d'une donnée du message de contrôle pour reconstituer la couleur de la donnée d'image vidéo que cette donnée avait remplacée;
- dans une seconde variante, en présence de données d'image vidéo définies chacune par un groupe de P bits pour une couleur rouge, un groupe de P bits pour une couleur verte et un groupe de P bits pour une couleur bleue, on peut remplacer K bits dans chaque groupe d'une donnée d'image vidéo d'une n-ième ligne ou d'une m-ième colonne par K bits dont les valeurs définissent une donnée d'un message de contrôle, et en réception on peut utiliser les P-K bits non remplacés de chacun des trois groupes d'une donnée du message de contrôle pour reconstituer la couleur de la donnée d'image vidéo que cette donnée avait remplacée;
- chaque donnée d'un message de contrôle peut être intégrée de façon redondante dans une image vidéo au moins deux fois;
- le message de contrôle peut également comprendre une valeur d'un compteur qui est représentative de la position de l'image vidéo acquise au sein d'une séquence (d'images vidéo);
- le message de contrôle peut également comprendre un code de correction d'erreur représentatif des données d'image vidéo restantes dans l'image traitée; 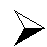 le code de correction d'erreur peut être de type CRC.

Le procédé selon l'invention peut comporter encore d'autres caractéristiques qui peuvent être prises séparément ou en combinaison, et notamment :
- on peut constituer l'image de synthèse à afficher à partir des données d'image vidéo qui restent dans l'image traitée reçue et de données auxiliaires et en fonction des données de contrôle extraites, qui pour certaines au moins sont relatives aux données auxiliaires;
- après avoir extrait les données de contrôle, on peut calculer un code de correction d'erreur qui est représentatif des données d'image vidéo restantes dans l'image traitée reçue, et on peut utiliser ces données d'image vidéo restantes lorsque le code de correction d'erreur calculé est identique à celui qui est défini par certaines des données de contrôle extraites.

L'invention est adaptée à la gestion de la génération et de l'utilisation d'images vidéo respectivement par une source et par un récepteur faisant partie d'un véhicule, éventuellement de type automobile.

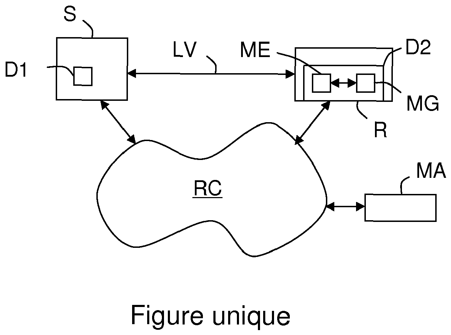

D'autres caractéristiques et avantages de l'invention apparaîtront à l'examen de la description détaillée ci-après, et du dessin annexé, sur lequel l'unique figure illustre schématiquement et fonctionnellement un réseau auquel sont connectés une source, équipée d'un premier dispositif de traitement selon l'invention, et un récepteur équipé d'un exemple de second dispositif de génération selon l'invention et connecté à la source par une liaison vidéo.

Le dessin annexé pourra non seulement servir à compléter l'invention, mais aussi contribuer à sa définition, le cas échéant.

L'invention a pour but d'offrir des premier et second procédés, et des premier et second dispositifs associés, destinés à permettre la transmission d'images vidéo entre une source S et un récepteur R, via une liaison vidéo numérique LV, ainsi qu'éventuellement l'utilisation par le récepteur R de données auxiliaires issues d'un réseau RC, éventuellement de communication. Selon l'invention, la source S et le récepteur R font partie d'un véhicule, éventuellement de type automobile. Par exemple, la source S est une caméra destinée à acquérir des images vidéo de l'environnement d'une partie du véhicule, et le récepteur R est un système (ou dispositif) d'aide à la conduite propre à générer des images de synthèse résultant de l'intégration dans des images de parties au moins des images vidéo fournies par la source S ou bien de l'adjonction de données auxiliaires dans des parties au moins des images vidéo fournies par la source S.

On notera que le récepteur R peut par exemple être implanté dans un équipement du véhicule tel qu'un ordinateur de bord ou un combiné ou encore un écran multifonctions. Mais, il peut être également externe à cet équipement.

Par ailleurs, on considère dans ce qui suit, à titre d'exemple non limitatif, que la liaison vidéo numérique LV qui relie la source S à l'équipement de réception R est de type LVDS (Low Voltage Differential Signaling) ou CML (Current Mode Logic). Mais, l'invention n'est pas limitée à ce type de liaison vidéo numérique. Elle concerne en effet tout type de liaison vidéo numérique permettant de transmettre des fichiers définissant des images vidéo.

Enfin, on considère dans ce qui suit, à titre d'exemple non limitatif, que le réseau RC auquel sont connectés la source S et le récepteur R est un réseau de bord multiplexé de véhicule. Mais, l'invention n'est pas limitée à ce type de réseau. Elle concerne en effet également, et notamment, les réseaux vidéo/multimédia, par exemple de type MOST ou e-MOST, et les réseaux de type Ethernet ou USB.

L'invention propose des premier et second procédés qui sont destinés à être mis en œuvre respectivement au niveau de la source S et du récepteur R.

Le premier procédé selon l'invention est mis en œuvre chaque fois que la source S doit transmettre une image vidéo acquise au récepteur R.

On notera que l'image vidéo peut être acquise par la source S ou bien par un autre équipement d'acquisition.

Ce premier procédé peut être mis en œuvre au moyen d'un premier dispositif de traitement D1.

On notera que dans l'unique figure le premier dispositif (de traitement) D1 fait partie de la source S. Mais, cela n'est pas obligatoire. En effet, il pourrait constituer un équipement ou élément connecté à la source S afin de pouvoir communiquer avec cette dernière. Par conséquent, le premier dispositif D1 peut être réalisé sous la forme de modules logiciels (ou informatiques), ou bien de circuits électroniques, ou encore d'une combinaison de circuits électroniques et de modules logiciels.

Le premier procédé (de traitement) consiste à constituer une image traitée à partir d'une image vidéo acquise présente dans la source S. Ce traitement (effectué par le premier dispositif D1) consiste à remplacer dans une image vidéo acquise certaines des données (numériques) d'image vidéo qui la constituent par un message de contrôle qui contient au moins un groupe de données de contrôle. Ces dernières sont de type non vidéo et définissent des informations qui sont destinées à être utilisées par le récepteur R pour constituer une image de synthèse devant être affichée à partir au moins des données d'image vidéo qui restent, après le remplacement, dans l'image traitée.

Tout type de données de contrôle utiles au niveau d'un récepteur R pour constituer une image de synthèse peut faire partie d'un message de contrôle. Ainsi, les données de contrôle peuvent par exemple définir l'état fonctionnel d'une caméra, la luminosité ambiante, le rhéostatage, des données de diagnostic, des caractéristiques de l'image vidéo traitée transmise (typologie, mode (configuration de l'image), thème (forme(s) d'objet(s) graphique(s)), ambiance (palette graphique utilisée), agencement d'objet(s) graphique(s), zone utile de l'image (zone à ne pas recouvrir, zone particulière), une signature électronique de l'image vidéo traitée. Selon l'invention, les données de contrôle comprennent des informations auxiliaires destinées à permettre une utilisation particulière synchronisée de données auxiliaires au niveau du récepteur R pour constituer une image de synthèse (comme par exemple des positions d'objets ou de textes, ou la désignation d'un filtrage spécifique à appliquer (comme par exemple un effet graphique choisi), ou encore la définition d'une phase de vie (extinction/allumage)).

Lorsque l'image vidéo acquise est un fichier constitué de données (numériques) d'image vidéo qui sont agencées sous la forme de N lignes de M colonnes de pixels, le premier dispositif D1 peut par exemple remplacer une partie au moins de la première ligne (ou ligne supérieure) ou de la n-ième (et donc dernière) ligne (ou ligne inférieure) ou plus généralement de la n-ième ligne (avec 1 ≤ n ≤ N) par un message de contrôle. En d'autres termes, l'image traitée comporte alors au moins N-1 lignes de données d'image vidéo et au plus une ligne de données de contrôle. Il y a donc une légère perte d'informations vidéo, mais on comprendra que cela n'est pas dommageable lorsque cela concerne un bord d'image (supérieur ou inférieur). En variante, il est également possible de remplacer une partie au moins de la m-ième colonne (avec 1 ≤ m ≤ M) par un message de contrôle. On notera que cela introduit également des pertes d'informations vidéo.

Il est rappelé qu'une image vidéo peut être caractérisée par une résolution (nombre N de lignes et nombre M de colonnes) et par une "profondeur de couleur" (nombre de bits définissant chaque pixel d'image).

Dans un exemple de réalisation non couvert par l'invention, afin de ne pas dégrader l'image vidéo, il serait également possible d'adjoindre à l'image vidéo acquise une partie au moins d'une 0-ième ligne ou d'une N+1-ième ligne. On comprendra qu'une 0-ième ligne est une ligne qui est adjointe avant la première ligne utile (n=1) d'une image, et donc qui n'est pas utilisée lors de l'affichage, et qu'une N+1-ième ligne est une ligne qui est adjointe après la dernière ligne utile (n=N) d'une image, et donc qui n'est pas utilisée lors de l'affichage. En variante, il serait également possible d'adjoindre à une image vidéo acquise une partie au moins d'une 0-ième colonne ou d'une M+1-ième colonne qui n'est pas non plus utilisée lors de l'affichage. Bien entendu, cela nécessiterait que le récepteur R soit informé de cette adjonction.

On notera que le message de contrôle peut également et avantageusement comprendre une valeur V(t) d'un compteur qui est représentative de la position de l'image vidéo acquise au sein d'une séquence d'images vidéo et qui est incrémentée d'une unité par le premier dispositif D1 ou la source S après chaque transmission d'une image traitée d'une séquence.

Cette valeur de compteur est destinée à signaler au récepteur R le numéro d'ordre d'une image traitée afin qu'il puisse l'utiliser à bon escient si elle est reçue de façon intègre (ou valide).

On notera également que le message de contrôle peut également et avantageusement comprendre un code de correction d'erreur qui est représentatif des données d'image vidéo qui restent dans une image traitée (après le remplacement par le message de contrôle). Ce code de correction d'erreur peut par exemple être de type CRC ("Cyclic Redundancy Check" (or "checksum"))). Il sert à déterminer au niveau du récepteur R si les données vidéo d'une image vidéo traitée reçue comportent des erreurs et donc si cette image vidéo traitée est intègre ou non.

Une fois qu'une image vidéo a été traitée par un premier dispositif D1, elle peut être transmise par la source S au récepteur R (destinataire) via la liaison vidéo numérique LV.

Le second procédé selon l'invention est mis en œuvre chaque fois que le récepteur R reçoit une image vidéo traitée par le premier dispositif D1 de la source S, via la liaison vidéo numérique LV.

Ce second procédé peut être mis en œuvre au moyen d'un second dispositif de génération D2.

On notera que dans l'unique figure le second dispositif (de génération) D2 fait partie du récepteur R. Mais, cela n'est pas obligatoire. En effet, il pourrait constituer un équipement ou élément connecté au récepteur R afin de pouvoir communiquer avec ce dernier. Par conséquent, le second dispositif (de génération) D2 peut être réalisé sous la forme de modules logiciels (ou informatiques), ou bien de circuits électroniques, ou encore d'une combinaison de circuits électroniques et de modules logiciels.

Le second procédé (de génération) consiste à extraire de chaque image traitée, reçue par le récepteur R, les données de contrôle qui sont contenues dans son message de contrôle, puis à constituer une image de synthèse à afficher à partir au moins des données d'image vidéo qui restent dans l'image traitée reçue et en fonction des données de contrôle extraites.

Par exemple, et comme illustré non limitativement sur l'unique figure, le second dispositif D2 peut comprendre, d'une part, un module d'extraction ME chargé d'extraire du fichier constituant une image traitée reçue le message de contrôle et les données d'image vidéo restantes, et, d'autre part, un module de génération MG couplé au module d'extraction ME et chargé de générer (ou constituer) les images de synthèse comme indiqué ci-avant.

On notera que lorsque le message de contrôle extrait comprend une valeur V(t) de compteur, le module d'extraction ME peut le stocker dans une mémoire (éventuellement de type logiciel). Ainsi, lorsqu'une image traitée est reçue et qu'il a extrait la valeur V(t) de son message de contrôle, il peut incrémenter d'une unité la valeur V(t') (t'<t) de l'image traitée précédemment reçue (stockée dans la mémoire) afin d'obtenir une valeur auxiliaire VA qu'il compare à la valeur V(t) extraite. On comprendra alors que si V(t) = VA cela signifie qu'il n'y a pas eu de perte d'image depuis la réception de l'image précédente, et donc que la dernière image traitée reçue peut être utilisée dans la continuité de la précédente, tandis que si V(t) ≠ VA cela signifie qu'il y a eu une perte d'image depuis la réception de l'image précédente, et donc que la dernière image traitée reçue ne peut a priori pas être utilisée dans la continuité de la précédente.

On notera également que lorsque le message de contrôle extrait comprend un code de correction d'erreur (CRC), le module d'extraction ME peut l'utiliser afin de vérifier l'intégrité des données d'image vidéo restantes, associées. Plus précisément, le module d'extraction ME peut par exemple comparer le code de correction d'erreur (CRC) qui est contenu dans le message de contrôle à un code de correction d'erreur (CRC) qu'il détermine à partir des données d'image vidéo restantes, qui accompagnent ce message de contrôle. On comprendra alors que la dernière image traitée reçue est considérée comme intègre (ou valide) lorsque son code de correction d'erreur (CRC) est identique à celui qui est déterminé par le module d'extraction ME, tandis que la dernière image traitée reçue est considérée comme non intègre (ou non valide) lorsque son code de correction d'erreur (CRC) est différent de celui qui est déterminé par le module d'extraction ME.

Si une image traitée reçue est considérée comme intègre (ou valide) et qu'il n'y a pas eu de perte d'image depuis la réception de l'image précédente, alors le module de génération MG peut utiliser ses données d'image vidéo restantes et ses données de contrôle pour constituer une image de synthèse.

On notera que comme des données auxiliaires, reçues par le récepteur via le réseau RC, doivent être utilisées avec les données d'image vidéo restantes d'une image traitée reçue, de façon synchronisée, alors le module de génération MG se sert des données de contrôle qui sont contenues dans le message de contrôle de cette image traitée reçue et qui concernent ces données auxiliaires reçues, pour constituer son image de synthèse. En d'autres termes, le module de génération MG constitue une image de synthèse à afficher à partir des données d'image vidéo restantes dans l'image traitée reçue et des données auxiliaires et en fonction des données de contrôle extraites.

Tout type de données auxiliaires peut être ici utilisé pour compléter les données d'image vidéo restantes d'une image vidéo traitée. Ainsi, il pourra par exemple s'agir de données fonctionnelles relatives (ici) au véhicule, telles que la vitesse du véhicule, des indicateurs de phares utilisés, des indicateurs de panne ou de dysfonctionnement ou de phase de vie du véhicule (comme par exemple l'extinction ou l'allumage), ou des codes désignant un filtrage à appliquer (comme par exemple un effet graphique ou une ambiance graphique) ou un type de découpage (position, taille, forme) à appliquer.

On notera également que toute technique connue de l'homme de l'art peut être utilisée pour constituer les images de synthèse à partir des données précitées. Aucune technique n'est en effet ici privilégiée. L'homme de l'art comprendra en effet qu'une fois qu'il possède des données de contrôle relatives à l'utilisation de données d'image vidéo et de données auxiliaires, il est alors en mesure d'utiliser ces données de contrôle pour constituer des images de synthèse à partir de ces données d'image vidéo et données auxiliaires.

On notera également que lorsque le message de contrôle extrait a remplacé des données d'image vidéo (ou pixels) contenu(e)s dans une partie au moins d'une n-ième ligne ou d'une m-ième colonne (et donc dans une zone d'image devant être affichée), le second dispositif D2 peut automatiquement remplacer chaque pixel manquant par un niveau de gris qui est prédéfini ou bien choisi en fonction des pixels voisins (non remplacés). Cela permet de limiter l'impact visuel induit par un pixel manquant sur une image affichée. En effet, un pixel de couleur noire ou gris foncé est généralement moins visible dans un environnement qu'un pixel qui est clair (blanc) du fait qu'il est manquant.

Dans une variante, le premier dispositif D1 peut par exemple utiliser des bits dont les valeurs définissent des niveaux de gris pour coder les données de contrôle d'un message de contrôle. Dans ce cas, en réception, le second dispositif D2 peut utiliser tels quels les bits des données de contrôle pour générer des pixels d'une image à afficher. Bien entendu, ces pixels (issus des données de contrôle) seront affichés en niveaux de gis.

Dans une autre variante, lorsque les pixels des images sont par exemple codés en RGB (rouge - vert - bleu), c'est-à-dire en un groupe de P bits pour le rouge, un groupe de P bits pour le vert et un groupe de P bits pour le bleu, le premier dispositif D1 peut par exemple choisir de ne remplacer que certains des bits de chaque groupe d'un pixel par des bits définissant une donnée de contrôle d'un message de contrôle. Par exemple, on peut décider de dédier K bits de chaque groupe (de préférence toujours les mêmes) à une donnée de contrôle d'un message de contrôle. Par exemple, si P est égal à 6, K peut être compris entre 2 et 4. Ces K bits sont de préférence choisis parmi les bits de poids le plus faible (LSB) d'un groupe. Mais, dans une variante les K bits peuvent être choisis parmi les bits de poids le plus fort (MSB) d'un groupe. On comprendra alors que le P-K bits de chaque groupe peuvent alors prendre n'importe quelle valeur pour coder l'un des trois paramètres de couleur (R, G ou B) du pixel considéré, et les K bits restants de chaque groupe peuvent alors prendre n'importe quelle valeur pour coder une donnée de contrôle d'un message de contrôle. Dans ce cas, en réception, le second dispositif D2 peut utiliser les P-K bits de chaque groupe d'un pixel ayant fait l'objet d'un "remplacement" pour reconstituer sa couleur au sein de son image et les K bits complémentaires en tant que données de contrôle. Cela est particulièrement avantageux car cela permet d'afficher le pixel avec une couleur qui est certes dégradée, mais malgré toute assez proche de celle de sa couleur d'origine (avant remplacement). En outre, cela permet de limiter les risques inhérents aux erreurs de transmission de données. En effet, le codage des données de contrôle se trouve alors en quelque sorte "réparti" sur les trois paramètres de couleur (R, G ou B) de certains pixels, ce qui augmente ce que l'homme de l'art appelle la distance de Hamming.

Afin de limiter encore plus les risques inhérents aux erreurs de transmission de données, il est également possible d'introduire une redondance des données de contrôle (qu'elles soient codées en niveaux de gris ou en RGB). Plus précisément, une même donnée de contrôle d'un message de contrôle peut par exemple être codée au moins deux fois au sein d'une même image, mais de préférence sur des pixels différents. Par exemple, une même donnée de contrôle d'un message de contrôle peut par exemple être codée de façon redondante sur les quatre pixels des "coins" d'un fichier d'image vidéo (à savoir le pixel de la première colonne et de la première ligne, le pixel de la dernière colonne et de la première ligne, le pixel de la première colonne et de la dernière ligne, et le pixel de la dernière colonne et de la dernière ligne). Cela permet en effet d'augmenter encore plus la distance de Hamming et donc de réduire encore plus les risques d'erreur de transmission.

On notera également qu'une fois que le second dispositif D2 a généré une image de synthèse, celle-ci est prête à être affichée par des moyens d'affichage MA, comme par exemple un écran intégré dans la planche de bord du véhicule.

Par exemple, et comme illustré non limitativement sur l'unique figure, les moyens d'affichage MA sont connectés au réseau RC du véhicule, et donc sont externes au récepteur R. Par conséquent, les fichiers de données numériques, qui constituent les images de synthèse générées par le second dispositif D2, sont transmis du récepteur R aux moyens d'affichage MA via le réseau RC. Mais, cela n'est pas obligatoire. En effet, les moyens d'affichage MA pourraient être connectés directement au récepteur R (ou à l'équipement qui le comprend (par exemple un ordinateur de bord)), ou bien ils pourraient faire partie du récepteur R.

L'invention ne se limite pas aux modes de réalisation de procédé de traitement, de dispositif de traitement, d'équipement source, de procédé de génération, de dispositif de génération et d'équipement de réception décrits ci-avant, seulement à titre d'exemple, mais elle englobe toutes les variantes que pourra envisager l'homme de l'art dans le cadre des revendications ci-après.

## Revendications

1. Procédé de génération d'images de synthèse à afficher par un récepteur (R), à partir d'une image vidéo acquise par une source d'acquisition d'images vidéo (S), la source S et l'équipement de réception R étant reliés par une liaison vidéo numérique LV, la source S et le récepteur R faisant partie d'un véhicule **caractérisé en ce qu'**il consiste, à partir de l'image vidéo acquise par la source d'acquisition d'images vidéo (S), à effectuer un premier traitement de l'image consistant à remplacer dans l'image vidéo acquise par la source (S), certaines des données d'image vidéo qui la constituent par un message de contrôle contenant au moins un groupe de données de contrôle, de type non vidéo, et définissant des informations destinées à être utilisées par ledit récepteur (R) et en cas de réception par le récepteur (R) d'une image vidéo traitée par la source (S), à extraire de cette image traitée, les données de contrôle contenues dans son message de contrôle, puis à constituer une image de synthèse à afficher à partir au moins des données d'image vidéo restantes après le premier traitement de l'image par la source (S) et des données de contrôle extraites par le récepteur (R), les données de contrôle comprenant des informations auxiliaires destinées à permettre une utilisation particulière synchronisée de données auxiliaires au niveau du récepteur R pour constituer une image de synthèse.

2. Procédé selon la revendication 1, **caractérisé en ce que** l'on constitue ladite image de synthèse à afficher à partir desdites données d'image vidéo restantes après le premier traitement de l'image et reçue par le récepteur (R), et de données auxiliaires et en fonction desdites données de contrôle extraites, qui pour certaines au moins sont relatives auxdites données auxiliaires.

3. Procédé selon l'une des revendications 1 et 2, **caractérisé en ce qu'**après avoir extrait lesdites données de contrôle, on calcule un code de correction d'erreur représentatif des données d'image vidéo restantes dans ladite image traitée reçue, et l'on utilise ces données d'image vidéo restantes lorsque le code de correction d'erreur calculé est identique à celui qui est défini par certaines desdites données de contrôle extraites.

4. Procédé selon l'une des revendications 1 à 3, **caractérisé en ce qu'**en présence d'une image vidéo acquise constituée de données d'image vidéo agencées sous la forme de N lignes, on remplace une partie au moins de la n-ième ligne (avec 1 ≤ n ≤ N) par ledit message de contrôle.

5. Procédé selon l'une des revendications 1 à 3, **caractérisé en ce qu'**en présence d'une image vidéo acquise constituée de données d'image vidéo agencées sous la forme de M colonnes, on remplace une partie au moins de la m-ième colonne (avec 1 ≤ m ≤ N) par ledit message de contrôle.

6. Procédé selon l'une des revendications 4 et 5, **caractérisé en ce que** l'on remplace en réception par un niveau de gris chaque donnée d'image vidéo remplacée.

7. Procédé selon l'une des revendications 4 et 5, **caractérisé en ce que** l'on remplace des données d'image vidéo par des données d'un message de contrôle dont les valeurs définissent des niveaux de gris, et en réception on utilise le niveau de gris d'une donnée du message de contrôle pour reconstituer la couleur de la donnée d'image vidéo que cette donnée avait remplacée.

8. Procédé selon l'une des revendications 4 et 5, **caractérisé en ce qu'**en présence de données d'image vidéo définies chacune par un groupe de P bits pour une couleur rouge, un groupe de P bits pour une couleur verte et un groupe de P bits pour une couleur bleue, on remplace K bits dans chaque groupe d'une donnée d'image vidéo par K bits dont les valeurs définissent une donnée d'un message de contrôle, et en réception on utilise les P-K bits non remplacés de chacun des trois groupes d'une donnée du message de contrôle pour reconstituer la couleur de la donnée d'image vidéo que cette donnée avait remplacée.

9. Procédé selon l'une des revendications 1 à 8, **caractérisé en ce que** chaque donnée d'un message de contrôle est intégrée de façon redondante au moins deux fois dans une image vidéo.

10. Procédé selon l'une des revendications 1 à 9, **caractérisé en ce que** ledit message de contrôle comprend en outre une valeur d'un compteur représentative de la position de ladite image vidéo acquise au sein d'une séquence.

11. Procédé selon l'une des revendications 1 à 9, **caractérisé en ce que** ledit message de contrôle comprend en outre un code de correction d'erreur représentatif desdites données d'image vidéo restantes dans ladite image traitée.

12. Procédé selon la revendication 11, **caractérisé en ce que** ledit code de correction d'erreur est de type CRC.

13. Dispositif (D2) de génération d'images de synthèse devant être affichées par un récepteur (R), **caractérisé en ce qu'**il est agencé, en cas de réception par ledit récepteur (R) d'une image traitée au moyen d'un procédé selon l'une des revendications 1 à 12, pour extraire de cette image traitée les données de contrôle contenues dans son message de contrôle, puis pour constituer une image de synthèse à afficher à partir au moins des données d'image vidéo restantes dans ladite image traitée reçue et en fonction desdites données de contrôle extraites.

14. Récepteur (R) propre à recevoir des images traitées d'une source (S), **caractérisé en ce qu'**il comprend un dispositif de génération d'images de synthèse (D2) selon la revendication 13.

15. Utilisation du procédé selon l'une des revendications 1 à 12, pour la gestion de la génération et de l'utilisation d'images vidéo respectivement par une source (S) et par un récepteur (R) faisant partie d'un véhicule.

## Patentansprüche

1. Verfahren zur Erzeugung von computergenerierten Bildern, die von einem Empfänger (R) angezeigt werden sollen, ausgehend von einem Videobild, das von einer Videobilderfassungsquelle (S) erfasst wird, wobei die Quelle S und der Empfänger R durch eine digitale Videoverbindung LV verbunden sind, wobei die Quelle S und der Empfänger R Teil eines Fahrzeugs sind, **dadurch gekennzeichnet, dass** es darin besteht, ausgehend von dem von der Videobilderfassungsquelle (S) erfassten Videobild eine erste Verarbeitung des Bildes durchführt, die darin besteht, in dem von der Quelle (S) erfassten Videobild einen Teil der es bildenden Videobilddaten durch eine Steuernachricht zu ersetzen, die mindestens eine Gruppe von Steuerdaten vom Nicht-Video-Typ enthält, und Informationen definiert, die dazu bestimmt sind, von dem genannten Empfänger (R) verwendet zu werden und im Falle des Empfangs eines von der Quelle (S) verarbeiteten Videobildes durch den Empfänger (R) aus diesem verarbeiteten Bild die in seiner Steuernachricht enthaltenen Steuerdaten zu extrahieren, dann ein synthetisches Bild zu bilden, das ausgehend von mindestens den nach der ersten Bildverarbeitung durch die Quelle (S) verbleibenden Videobilddaten und von durch den Empfänger (R) extrahierten Steuerdaten anzuzeigen ist, wobei die Steuerdaten Hilfsinformationen enthalten, die dazu bestimmt sind, eine besondere synchronisierte Verwendung der Hilfsdaten beim Empfänger R zu ermöglichen, um ein synthetisches Bild zu bilden.

2. Verfahren nach Anspruch 1, **dadurch gekennzeichnet, dass** das anzuzeigende synthetische Bild aus den nach der ersten Verarbeitung des Bildes verbleibenden und vom Empfänger (R) empfangenen Videobilddaten sowie aus Hilfsdaten und in Abhängigkeit von den extrahierten Steuerdaten, die zumindest teilweise relativ zu den Hilfsdaten sind, gebildet wird.

3. Verfahren nach einem der Ansprüche 1 und 2, **dadurch gekennzeichnet, daß** nach dem Extrahieren der Steuerdaten ein Fehlerkorrekturcode berechnet wird, der für die verbleibenden Videobilddaten in dem empfangenen verarbeiteten Bild repräsentativ ist, und die verbleibenden Videobilddaten verwendet werden, wenn der berechnete Fehlerkorrekturcode mit dem durch einige der extrahierten Steuerdaten definierten identisch ist.

4. Verfahren nach einem der Ansprüche 1 bis 3, **dadurch gekennzeichnet, daß** bei Vorliegen eines erfaßten Videobildes, das aus Videobilddaten besteht, die in Form von N Zeilen angeordnet sind, mindestens ein Teil der n-ten Zeile (mit 1 ≤ n ≤ N) durch die genannte Steuernachricht ersetzt wird.

5. Verfahren nach einem der Ansprüche 1 bis 3, **dadurch gekennzeichnet, dass** bei Vorhandensein eines erfassten Videobildes, das aus Videobilddaten besteht, die in Form von M Spalten angeordnet sind, mindestens ein Teil der m-ten Spalte (mit 1 ≤ m ≤ N) durch die genannte Kontrollnachricht ersetzt wird.

6. Verfahren nach einem der Ansprüche 4 und 5, **dadurch gekennzeichnet, dass** die jeweils ersetzten Videobilddaten beim Empfang durch eine Graustufe ersetzt werden.

7. Verfahren nach einem der Ansprüche 4 und 5, **dadurch gekennzeichnet, daß** Videobilddaten durch Daten einer Kontrollnachricht ersetzt werden, deren Werte Graustufen definieren, und beim Empfang die Graustufe eines Datenelements der Kontrollnachricht verwendet wird, um die Farbe der Videobilddaten, die dieses Datenelement ersetzt hatte, wiederherzustellen.

8. Verfahren nach einem der Ansprüche 4 und 5, **dadurch gekennzeichnet, dass** bei Vorhandensein von Videobilddaten, die jeweils durch eine Gruppe von P Bits für eine rote Farbe, eine Gruppe von P Bits für eine grüne Farbe und eine Gruppe von P Bits für eine blaue Farbe definiert sind, K Bits in jeder Gruppe eines Videobilddatenelements werden durch K Bits ersetzt, deren Werte ein Datenelement einer Steuernachricht definieren, und beim Empfang werden die nicht ersetzten P-K Bits jeder der drei Gruppen eines Datenelements der Steuernachricht verwendet, um die Farbe des Videobilddatenelements zu rekonstruieren, das dieses Datenelement ersetzt hatte.

9. Verfahren nach einem der Ansprüche 1 bis 8, **dadurch gekennzeichnet, dass** jedes Datenelement einer Steuernachricht mindestens zweimal redundant in ein Videobild integriert wird.

10. Verfahren nach einem der Ansprüche 1 bis 9, **dadurch gekennzeichnet, dass** die Kontrollnachricht außerdem einen Wert eines Zählers umfasst, der für die Position des innerhalb einer Sequenz erfassten Videobildes repräsentativ ist.

11. Verfahren nach einem der Ansprüche 1 bis 9, **dadurch gekennzeichnet, daß** die genannte Kontrollnachricht außerdem einen Fehlerkorrekturcode umfaßt, der für die genannten Videobilddaten repräsentativ ist, die in dem genannten verarbeiteten Bild verbleiben.

12. Verfahren nach Anspruch 11, **dadurch gekennzeichnet, dass** der Fehlerkorrekturcode vom CRC-Typ ist.

13. Vorrichtung (D2) zur Erzeugung von synthetischen Bildern, die von einem Empfänger (R) angezeigt werden sollen, **dadurch gekennzeichnet, dass** sie so ausgelegt ist, dass sie im Falle des Empfangs eines Bildes durch den Empfänger (R), das mit Hilfe eines Verfahrens nach einem der Ansprüche 1 bis 12 verarbeitet wurde, aus diesem verarbeiteten Bild die in seiner Steuernachricht enthaltenen Steuerdaten extrahiert und dann ein synthetisches Bild bildet, das ausgehend von mindestens den Videobilddaten, die in dem empfangenen verarbeiteten Bild verbleiben, und in Abhängigkeit von den extrahierten Steuerdaten angezeigt werden soll.

14. Empfänger (R), der zum Empfang verarbeiteter Bilder von einer Quelle (S) geeignet ist, **dadurch gekennzeichnet, dass** er eine Vorrichtung zur Erzeugung synthetischer Bilder (D2) nach Anspruch 13 umfasst.

15. Verwendung des Verfahrens nach einem der Ansprüche 1 bis 12 zur Verwaltung der Erzeugung und Verwendung von Videobildern durch eine Quelle (S) bzw. einen Empfänger (R), die Teil eines Fahrzeugs sind.

## Claims

1. Process for generating computer-generated images to be displayed by a receiver (R), from a video image acquired by a video image acquisition source (S), the source S and the receiver R being connected by a digital video link LV, the source S and the receiver R being part of a vehicle, **characterized in that** it consists, from the video image acquired by the video image acquisition source (S), performing a first processing of the image consisting in replacing, in the video image acquired by the source (S), some of the video image data constituting it by a control message containing at least one group of control data, of non-video type, and defining information intended to be used by the said receiver (R) and, in the event of reception by the receiver (R) of a video image processed by the source (S), to extract from this processed image the control data contained in its control message, then to constitute a computer-generated image to be displayed from at least the video image data remaining after the first image processing by the source (S) and control data extracted by the receiver (R), the control data comprising auxiliary information intended to allow a particular synchronized use of auxiliary data at the receiver R to constitute a computer-generated image.

2. Method according to claim 1, **characterized in that** the said computer-generated image to be displayed is constituted from the said video image data remaining after the first processing of the image and received by the receiver (R), and from auxiliary data and as a function of the said extracted control data, which for some at least are relative to the said auxiliary data.

3. A method according to one of claims 1 and 2, **characterized in that** after extracting said control data, an error correction code representative of the remaining video image data in said received processed image is calculated, and said remaining video image data is used when the calculated error correction code is identical to that defined by some of said extracted control data.

4. A method according to one of claims 1 to 3, **characterized in that** in the presence of an acquired video image consisting of video image data arranged in the form of N lines, replacing at least a part of the n-th line (with 1 ≤ n ≤ N) with said control message.

5. A method according to one of claims 1 to 3, **characterized in that** in the presence of an acquired video image consisting of video image data arranged in the form of M columns, at least part of the m-th column (with 1 ≤ m ≤ N) is replaced by said control message.

6. Method according to one of claims 4 and 5, **characterized in that** each replaced video image data is replaced on reception by a grey level.

7. Process according to one of claims 4 and 5, **characterized in that** video image data are replaced by data of a control message whose values define grey levels, and in reception the grey level of a data item of the control message is used to reconstitute the colour of the video image data which this data item had replaced.

8. Method according to one of claims 4 and 5, **characterized in that** in the presence of video image data each defined by a group of P bits for a red colour, a group of P bits for a green colour and a group of P bits for a blue colour, K bits in each group of a video image data item are replaced by K bits whose values define a data item of a control message, and on reception the non-replaced P-K bits of each of the three groups of a data item of the control message are used to reconstruct the colour of the video image data item which that data item had replaced.

9. Method according to one of claims 1 to 8, **characterized in that** each data item of a control message is integrated redundantly at least twice into a video image.

10. Method according to one of claims 1 to 9, **characterized in that** the said control message furthermore comprises a value of a counter representative of the position of the said video image acquired within a sequence.

11. Method according to one of claims 1 to 9, **characterized in that** the said control message furthermore comprises an error correction code representative of the said video image data remaining in the said processed image.

12. A method according to claim 11, **characterized in that** said error correction code is of the CRC type.

13. Device (D2) for generating computer-generated images to be displayed by a receiver (R), **characterized in that** it is arranged, in the event of reception by the said receiver (R) of an image processed by means of a method according to one of claims 1 to 12, to extract from this processed image the control data contained in its control message, then to constitute a computer-generated image to be displayed from at least the remaining video image data in the said processed image received and as a function of the said extracted control data.

14. A receiver (R) suitable for receiving processed images from a source (S), **characterized in that** it comprises a computer-generated image generating device (D2) according to claim 13.

15. Use of the method according to one of claims 1 to 12, for managing the generation and use of video images respectively by a source (S) and by a receiver (R) forming part of a vehicle.
